Europäisches Patentamt

European Patent Office

Office européen des brevets

(11) Publication number: **0 306 546**
**A1**

(12) **EUROPEAN PATENT APPLICATION**

(21) Application number: 87113190.0

(22) Date of filing: 09.09.87

(51) Int. Cl.⁴ **E21B 43/27 , E21B 43/26 , E21B 43/22 , C08F 220/58**

(43) Date of publication of application:
15.03.89 Bulletin 89/11

(84) Designated Contracting States:
AT BE DE FR GB IT NL SE

(71) Applicant: **PHILLIPS PETROLEUM COMPANY**
**5th and Keeler**
**Bartlesville Oklahoma 74004(US)**

(72) Inventor: **Shell, Francis Joseph**
**534 SE Crestland Dr.**
**Bartlesville, OK 74006(US)**
Inventor: **Burns, Lyle Dean**
**342 SE Turkeycreek Rd.**
**Bartlesville, OK 74006(US)**
Inventor: **Swanson, Billy Lars**
**Rt. 1, Box 180**
**Delaware, OK(US)**

(74) Representative: **Geissler, Bernhard, Dr. jur.,**
**Dipl.-Phys. Patent- und Rechtsanwälte et al**
**Bardehle-Pagenberg-Dost-**
**Altenburg-Frohwitter-Geissler & Partner**
**Postfach 86 06 20**
**D-8000 München 86(DE)**

(54) Irradiation produced AMPS/Am copolymers in thickened acid compositions.

(57) Water-soluble thickened acid compositions suitable for matrix or fracture acidizing are provided comprising water, an acid, and an acid thickening amount of a copolymer of sodium 2-acrylamido-2-methylpropane sulfonate and acrylamide produced by irradiation. These compositions are useful without a crosslinking agent. They are also suitable for mud acidizing.

EP 0 306 546 A1

## IRRADIATION PRODUCED AMPS/Am COPOLYMERS IN THICKENED ACID COMPOSITIONS

This application is a division of application Serial No. 610,221, filed May 14, 1984.

### Background of the Invention

This invention relates to stimulation procedures to increase oil recovery.

The use of aqueous acidic compositions for treating subterranean formations to stimulate the production of hydrocarbons therefrom by acidizing and/or fracturing is known. It is also known to thicken such aqueous acid compositions by incorporating a water-soluble or water-dispersible polymeric viscosifier. Various gelling or crosslinking agents and/or foaming agents have been added to polymer-containing aqueous acid compositions to form retarded acid gels suitable for introduction into subterranean formations. However, the use of crosslinking agents requires meticulous control of injection conditions since even a slight error can cause the system to fail to gel, or worse yet, to gel in the injection equipment before it reaches the formation.

### Brief Summary of the Invention

It is an object of this invention to provide improved thickened acid compositions.

It is a further object of this invention to retard the action of the acid on the limestone to allow live acid to be placed deeply in the formation.

It is a further object of this invention to provide improved methods of forming thickened acids.

It is yet a further object of this invention to provide improved acidizing techniques.

It is still yet a further object of this invention to provide compositions for acidizing and/or acidizing and fracturing which allow great leeway in injection procedures.

In accordance with this invention, a water-soluble copolymer of sodium 2-acrylamido-2-methylpropanesulfonate (NaAMPS) and acrylamide (Am) made using irradiation initiation is used to thicken an aqueous acid composition.

### Description of the Preferred Embodiments

For the purpose of this description, the term "thickened acids" refers to aqueous solutions of acids containing water-soluble or water-dispersible polymeric viscosifiers without a crosslinking agent as produced, for instance in accordance with this invention. The term "gelled acids" refers to aqueous acid compositions comprising water-soluble or water-dispersible polymeric viscosifiers with a crosslinking or gelling agent. The viscosity imparted to the aqueous acid depends on the molecular weight of the polymeric viscosifier and its concentration in the acid. Also it is a function of the inherent thickening power of the polymer used. The polymer compositions set out for use herein have good inherent thickening power thus allowing their use without the incorporation of any crosslinking or gelling agent.

The term "copolymer" as used herein encompasses copolymer viscosifier compositions derived from sodium 2-acrylamido-2-methyl propanesulfonate and acrylamide. Both monomers are commercially available and can be prepared in a manner well known in the art. The term "AMPS" is a trademark of the Lubrizol Corporation for 2-acrylamido-2-methylpropanesulfonic acid.

The copolymers of this invention can be made by any high energy ionizing radiation technique known in the art but are preferably made in a salt solution as disclosed by Phalanges et al, U.S. 4,137,969 (Feb. 6, 1979), the disclosure of which is hereby incorporated by reference.

Briefly, this preferred procedure involves irradiating an aqueous solution having a pH of about 2 to about 12 and containing about 10 percent to about 40 percent by weight of a monomer mixture comprising 40 to 95 weight percent sodium-2-acrylamido-2-methylpropanesulfonate and 5 to 60 weight percent acrylamide said solution containing at least about 3 percent by weight of a salt selected from the group consisting of potassium sulfate, potassium chloride, potassium fluoride, potassium bisulfate, tribasic potassium phosphate, dibasic potassium phosphate, monobasic potassium phosphate, sodium sulfate, sodium bisulfate, sodium chloride, tribasic ·sodium phosphate, dibasic sodium phosphate, monobasic sodium phosphate, lithium sulfate, lithium bisulfate, lithium chloride, ammonium sulfate, ammonium bisulfate, ammonium chloride, tribasic ammonium phosphate, dibasic ammonium phosphate, monobasic ammonium phosphate, ammonium fluoride, and mixtures thereof, with high-energy ionizing radiation at an intensity of about 1,000 to about 200,000 rads per hour to a total radiation dose of about 1,000 to about 30,000 rads, to form an aqueous solution of a water-soluble, substantially linear high molecular weight copolymer, provided that the aqueous solution has a pH of about 7 to about 9 when the water-soluble salt is an ammonium salt.

The resulting composition has from 40 to 95 weight percent polymerized units of said sodium 2-acrylamido-2-methylpropanesulfonate and from 5 to 60 weight percent polymer units of said acrylamide; preferably the composition has 50 to 90, more preferably about 70 weight percent of said sodium 2-acrylamido-2-methylpropanesulfonate and 20 to 50, more preferably about 30 weight percent of said acrylamide.

The thickened acid compositions of this invention are most suitable for fracture acidizing subterranean oil formations to enhance oil recovery. However, they may also be used in matrix acidizing, i.e., where the acid is injected into the formation at a rate insufficient to create cracks or fractures in the formation, or to thicken mud acids which are a combination of hydrochloric acid and in situ generated hydrofluoric acid from HCl and ammonium bifluoride.

The thickened acid compositions of this invention can also be used as the acid of a pad/acid technique. This technique wherein low cost conventional hydraulic fracturing is followed by etching with acid (in effect as an alternative to propping agents) is disclosed in Hendrickson et al, The Journal of Canadian Petroleum Technology, pages 1-5 (January-March 1969) the disclosure of which is hereby incorporated by reference. Propping agents may still be used in conjunction with the teachings of this invention to further enhance oil production. The thickened acid compositions of this invention can finger through high viscosity pads and provide a more conductive etch pattern than crosslinked acid compositions. When the heat breaks down the pad fluid it can dilute the thickened acid since it is uncrosslinked. Also, while the thickened acid compositions of this invention can be used at any temperature, their stability to high temperatures give them yet another advantage in formations having high temperatures and/or high divalent ion concentrations.

The thickened acid compositions are prepared by dissolving or dispersing a NaAMPS/Am copolymeric viscosifier as defined herein in an aqueous acid solution.

The polymeric component of the thickened acid compositions of this invention thus resist degeneration by acid, shear, heat or electrolyte content of the formation or makeup water. The polymer of the thickened acid composition is stable under high shear rates as encountered in pumping the acid composition. For instance, it is very stable to shear at pump rates of ten to sixty barrels per minute down various sizes of tubing for periods of time sufficient for said compositions to reach well depths of ten feet to forty thousand feet. Secondly, it is stable for long periods of time under conditions of relatively high temperature in the formation, for instance up to 170 F (77° C) and above. This stability which is of importance even at room temperature greatly enhances the desirability of the compositions of this invention because it allows making acid compositions under conditions of high hydrogen ion concentration (low pH) several days prior to the time they are to be used. Of course, any pH below 7 defines an acidic condition but the invention is primarily concerned with acid systems where the pH is about 3 or below, generally a finite amount but below 1.

The acid compositions of this invention also have good friction reducing properties. They possess sufficient mobility to permit good penetration of the live acid composition into the formation with reduced fluid loss to the matrix of the formation. Once penetration has been attained, the compositions are capable of remaining in contact with the formation for a period of time sufficient for the acid in the composition to react with the acid-soluble component of the formation creating new conductive passageways or enlarging existing passageways through the formation and stimulate the production of fluids therefrom. Thereafter the compositions should be such that no permanent gel forms but rather the material is or becomes sufficiently fluid to be largely recovered to open the thus enlarged fractures to oil recovery. These fractures may be created by the injection pressure or may be already present but in either event they are enlarged by the acid. However, the spent acid compositions do retain sufficient viscosity to suspend unreacted rock fines or formation debris for removal from the formation during fluid recovery.

The basic components of the thickened acid compositions are:

(1) water;

(2) acid; and

(3) polymeric viscosifier.

The water can be essentially pure water, i.e., tap water, or can be sea water or simulated sea water, or a saline solution such as field brine or connate water.

Acids useful in the practice of the invention include any acid which is effective in increasing the flow of fluids, e.g., hydrocarbons, through the formation and into the well. Thus, under proper conditions of use, examples of such acids can include mineral or inorganic acids, such as hydrochloric acid, nitric acid, sulfamic acid, and hydrofluoric acid. HF can be generated in situ. In addition, $C_1$-$C_4$ organic acids such as formic acid, acetic acid, propionic acid, butyric acid, halogenated carboxylic acids, such as chloroacetic and chloropropionic acid, and mixtures thereof, in combination with inorganic acids such as HCl are also suitable. The non-oxidizing inorganic acids are preferred. Hydrochloric acid is most preferred.

The concentration or strength of the acid can vary depending upon the type of acid, the type of formation being treated, the above-stated compatibility requirements and the results desired in the particular treating operation. Generally speaking, the concentration of the acid can vary from about 0.4 to about 60 weight percent (or the maximum solubility of the acid), based on the total weight of the thickened acid composition, depending upon the type of acid, with concentrations within the range of 5 to 50 weight percent usually preferred. Most preferably aqueous acids of a concentration of 15 to 28 weight percent acid based on the water and acid are used. This range is particularly representative for aqueous hydrochloric acid although hydrochloric acid can contain up to 37 weight percent HCl.

The compositions of this invention can be used in conjunction with surfactants and known foaming techniques with an inert gas such as nitrogen or carbon dioxide to produce a 65 or greater quality foam. The foam quality is determined by dividing the gas volume in the foam by the total foam volume and multiplying by 100 as disclosed in Norman et al U.S. 4,324,669 (April 13, 1982) the disclosure of which is hereby incorporated by reference. The acids used in the practice of the invention can also contain corrosion inhibitors, emulsifying agents, sequestering agents, friction reducers, fluid loss additives and other conventional additives known in the art. The compositions of this invention may be combined with oil-wetting surfactants commonly used in chemically retarded acids to provide acid retardation.

The amount of the NaAMPS/Am copolymer used in preparing the thickened acid compositions of the invention can vary widely depending upon the particular polymer used, the purity of the polymer and properties desired in the final composition, but will be an acid-thickening amount, i.e., at least an amount which will significantly thicken the aqueous acid solution to which it is added. For all practical purposes, the amount of polymer employed in the instant compositions will generally be within the range of from about 0.01 to about 15 weight percent, based upon the total weight of the composition, preferably from about 0.10 to about 3 weight percent most preferably from 0.6 to 1.5 weight percent.

The invention is utilized in acidizing porous subterranean formations penetrated by a well bore so as to increase the production of fluids, e.g., crude oil, natural gas, and like hydrocarbons from the formation. Acidizing involves introducing an acid into a well under sufficient pressure to force the acid out into the formation where it reacts with the acid-soluble components of the formation. The present invention is directed to a variation of this technique wherein the effect of the acid is retarded until the injected material has penetrated a greater distance into the formation. The technique is not limited to formations of high acid solubility, such as limestone or dolomite, but is also applicable to other kinds of formations, such as sandstone containing streaks of acid-soluble components such as the various carbonates. It is frequently desirable to energize the injected thickened acid compositions by pressuring with nitrogen or other inert gas as is known in the art.

## Example I

This example demonstrates that the acid-retarding effectiveness of a 70/30 wt/wt copolymer of sodium 2-aorylamido-2-methylpropanesulfonate (NaAMPS) and acrylamide (Am) is enhanced if the copolymer is prepared in a polymerization system initiated by gamma irradiation. By contrast, if the 70/30 wt wt NaAMPS/Am copolymer is prepared in a polymerization system initiated by chemical initiation, the copolymer is less effective in acid-retardation.

Three samples of copolymer made by irradiation initiation and one sample of copolymer made by chemical initiation were used in the acid retardation tests. One of the irradiation copolymer samples (Reten® 547E) exhibited about the same viscosity as the chemically initiated sample (SPX 5025) whereas the viscosity of the other two irradiation copolymer samples (Reten® 547C and Reten® 547D) bracketed the viscosity grade of the chemically initiated sample (SPX 5025). Based on viscosity characterization, the molecular weights of samples Reten® 547E and SPX 5025 were considered comparable. The results of the acid retardation tests are summarized in Table I.

## TABLE I

### Acid Retardation* Effectiveness of 70/30 Wt/Wt Copolymers of NaAMPS and Acrylamide (Am)

| Copolymer Samples | Run No. | Viscosity | Limestone Weight Loss* (g/min) |
|---|---|---|---|
| Reten® 547C[a] | 1 | Intermediate | 0.16 |
| Reten® 547E[b] | 2 | Similar to SPX 5025 | 0.20 |
| Reten® 547D[c] | 3 | Low | 0.22 |
| SPX 5025[d] | 4 | Similar to Reten® 547E | 0.31 |

*Samples of limestone (5/8 inch cubes) from the Smackover formation in Hopkins County, Texas were contacted with a one weight percent copolymer solution in 28 weight percent hydrochloric acid for 10 minutes at 200 F. The more effective acid retardation of the irradiation-initiated copolymers (Runs 1, 2, 3) was signaled by the lower weight loss of the limestone cube in the respective copolymer solutions compared to the weight loss in Run 4 containing the chemically initiated copolymer.

[a,b,c] These copolymers were prepared in polymerization systems initiated by gamma irradiation.

[d] This copolymer was prepared in a polymerization which was chemically initiated.

Referring to the results in Table I, it is evident that the irradiation-initiated copolymers (runs 1, 2, 3) were more effective in acid retardation (relatively low values for limestone weight loss) than was the chemically-initiated copolymer (run 4: relatively high value for limestone weight loss). It is also noteworthy that copolymers of comparable viscosity grade and therefore, presumably of comparable molecular weights (runs 2 and 4) exhibited a significant difference in acid-retardation effectiveness. This difference clearly indicates the greater acid-retarding effectiveness of the irradiation initiated copolymer over the chemically initiated copolymer. Given enough time the thickened acid eventually consumes as much limestone as the unthickened.

One possible explanation for the surprisingly beneficial effect of the irradiation initiated material is that it is of a more linear molecular configuration. This is contrary to what would be postulated based on theory since in theory the irradiation should give a more branched, rather than linear configuration. Also the irradiated material would be terminated by a proton.

## Example II

A 7,830 foot, 155 F BHST (Bottom hole static temperature) Fusselman well in Roosevelt County, New Mexico, was initially completed with 14,000 gal of 15-28% HCI in a matrix fashion. The initial production was 113 BOPD (barrels oil per day), 55 BWPD (barrels water per day) and 57 MMCFGPD (million cubic feet gas per day) which declined at a 60% annual rate to 3 BOPD.

The well was recompleted with a hydraulic sand fracture which screened out midway through the treatment. Oil production before and after was unchanged.

Four months later, the well was treated with 500 gallons of 15% breakdown acid and fractured with 15,000 gallons of 20% HCI containing DSGA polymer as a thickening agent in combination with 12,000 gallons of pad and 6,000 gallons of flush. DSGA is a designation for irradiation-produced 70/30 NaAMPS/Am copolymer. Three alternating pad-gelled acid stages were pumped at 13 BPM with 400 scf/bbl of nitrogen.

Initial production after the DSGA polymer treatment was 23 BOPD, 2 BWPD and 31 MCFGPD. Production averaged 35 BOPD, 5 BWPD and 57 MCFGPD in the first 30 days. The first six months production averaged 31 BOPD, 6 BWPD and 33 MCFGPD.

## Example III

A 282 F, 12,570 ft Interlake Formation in McKenzie County, North Dakota, was perforated over a 110 ft interval. The well was stimulated initially with 5,000 gal of 15% HCI initiating production at 590 BOPD and 30 BWPD in the first month. In the first two years of production, the production declined annually to 77 BOPD, 21 BWPD and 130 MCFGPD.

The well was recompleted using 20,000 gallons of 28% HCI with DSGA polymer (concentration 130 lb/1000 gallons) and 13,000 gallons of pad and flush fluids. Ball sealers were used for diversion. The well initially flowed 440 BOPD, 35 BWPD and 830 MCFGPD. Stabilized production for the first month on pump was 516 BOPD, 71 BWPD and 860 MCFGPD.

## Example IV

The Charles "C" formation in Roosevelt County, Montana, was perforated at 6262-76 ft in this 160F well. The average permeability was 0.41 md and the average porosity was 14%. The well was initially stimulated with 1,500 gallons of 15% HCI using ball sealers at 2 BPM. The initial production was 142 BOPD and 28 BWPD. After five months, production had declined to 72 BOPD and 11 BWPD.

The 14 foot interval was broken down again with 2,000 gal 15% HCI followed by 7,000 gallons (500 gal/ft) of 28% acid containing DSGA polymer (100 lb/1000 gal) as a gelling agent. The treatment consisted of two stages of pad, gelled acid and overflush pumped at 7 BPM. The pad and overflush volumes were 6,000 gallons each. A combination of ball sealers and benzoic acid flakes were used for diversion in the first overflush stage. All fluids contained 500 scf/bbl of nitrogen.

The well responded with an initial production of 261 BOPD and 45 BWPD. The first months production averaged 208 BOPD and 29 BWPD.

## Example V

This 132 F, 8094-8144 foot Wolfcamp interval in Andrews County, Texas, produced for 10 years prior to being abandoned when production declined to 2 BOPD and 52 MCFGPD with no water. The well was initially completed with 16,000 gallons of 15% acid. The initial production averaged 33 BOPD.

Fourteen years after abandonment the Wolfcamp zone was reentered. The production average for the lease was 5 BOPD. It was anticipated 15 BOPD could be attained using DSGA polymer (90 lb/1000 gal) in a thickened acid fracture treatment. After treating with 10,500 gallons of 28% DSGA and 9,000 gallons of pad and flush fluids at 12 BPM with 1,000 scf/bbl nitrogen, the well initially responded with 39 BOPD.

While this invention has been described in detail for the purpose of illustration, it is not to be construed as limited thereby but is intended to cover all changes and modifications within the spirit and scope thereof.

## Claims

1. A thickened acid composition comprising:

(1) water;

(2) an acid; and

(3) a copolymer of a monomer mixture of sodium 2-acrylamido-2-methylpropanesulfonate and acrylamide, in particular wherein said copolymer has been prepared by high energy ionizing irradiation initiation of said mixture;

in particular wherein said copolymer is present in an amount of 0.01 to 15 wt %, yet more particularly 0.1 to 3 wt %, based on the total weight of said composition;

more particularly wherein said acid has a concentration of 15 to 28 weight percent based on the total weight of said acid and said water.

2. A composition according to claim 1 wherein said composition consists essentially of said water, acid and said copolymer.

3. A composition according to claim 1 wherein said copolymer comprises 50-90 weight percent of said sodium 2-acrylamido-2-methylpropanesulfonate and about 30 weight percent of said acrylamide; in particular wherein said copolymer comprises about 70 weight percent of said sodium 2-acrylamido-2-methylpropanesulfonate and about 30 weight percent of said acrylamide.

4. A composition according to claims 1, 2 or 3 wherein said acid is

(1) a combination of in situ generated HF and HCl or

(2) a combination of an organic acid and HCl, or

(3) hydrochloric acid.

5. A composition according to one of the preceding claims wherein said thickened acid composition comprises in addition a foaming agent; in particular wherein said foaming agent is nitrogen or carbon dioxide and a surfactant.

6. A composition according to one of claims 1 to 5 wherein said irradiation is carried out in an aqueous solution having a pH of about 2 to 12 and containing about 10 percent to about 40 percent by weight of said monomer mixture and containing at least 3 percent by weight of a salt selected from the group consisting of potassium sulfate, potassium chloride, potassium fluoride, potassium bisulfate, tribasic potassium phosphate, dibasic potassium phosphate, monobasic potassium phosphate, sodium sulfate, sodium bisulfate, sodium chloride, tribasic sodium phosphate, dibasic sodium phosphate, monobasic sodium phosphate, lithium sulfate, lithium bisulfate, lithium chloride, ammonium sulfate, ammonium bisulfate, ammonium chloride, tribasic ammonium phosphate, dibasic ammonium phosphate, monobasic ammonium phosphate, ammonium fluoride, and mixtures thereof, and provided that the aqueous solution has a pH of about 7 to about 9 when the water-soluble salt is an ammonium salt; in particular wherein said irradiation is carried out with radiation at an intensity of about 1,000 to about 200,000 rads per hour to a total radiation dose of about 1,000 to 30,000 rads.

7. A process for acidizing a subterranean formation penetrated by at least one well comprising injecting into said formation in the absence of a crosslinking agent a composition as defined in one of the preceding claims.

8. A process according to claim 7 comprising one or more of the following features:

(a) said composition is injected under sufficient pressure to fracture said formation;

(b) said formation is at a temperature of at least 170° F;

(c) said composition is injected to acid etch subsequent to injection of a hydraulic fracturing fluid;

(d) said acidizing is carried out under mud acidizing conditions;

(e) said acid is used in combination with a propping agent;

(f) inert gas is used to energize the thus injected composition.

9. Use of a copolymer of a monomer mixture of

(a) sodium 2-acrylamido-2-methylpropanesulfonate and

(b) acrylamide,

in particular such a copolymer prepared by high energy irradiation, for treating, in particular acidizing, a subterranean formation.

10. Use in accordance with claim 1 wherein a composition in accordance with one of claims 1 to 6 is injected into said formation.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 044 833 (H.A. VOLZ) <br> * Claims 1-4 * | 1-5,7,8 ,10 | E 21 B 43/27 <br> E 21 B 43/26 <br> E 21 B 43/22 <br> C 08 F 220/58 |
| Y | | 6 | |
| Y | US-A-4 137 969 (C.J. PHALANGAS) <br> * Claims 1,2 * | 6 | |
| Y | GB-A-1 591 552 (HERCULES) <br> * Claims 1,2 * | 6 | |
| X | GB-A-1 451 706 (LUBRIZOL) <br> * Claims 1-4; page 1, line 32 - page 2, line 24 * | 9 | |
| A | US-A-3 931 089 (C.L. KARL) <br> * Claims 1-4 * | 1-10 | |

TECHNICAL FIELDS SEARCHED (Int. Cl.4)

E 21 B
C 08 F

The present search report has been drawn up for all claims

| Place of search | Date of completion of the search | Examiner |
|---|---|---|
| THE HAGUE | 30-03-1988 | ROTSAERT L.D.C. |